# EUROPÄISCHE PATENTSCHRIFT

(11) **EP 2 822 824 B1**
(45) Veröffentlichungstag und Bekanntmachung des Hinweises auf die Patenterteilung: **23.08.2017**
(21) Anmeldenummer: 13709353.0
(22) Anmeldetag: 05.03.2013
(51) Int. Cl.: B60T 8/36, B60T 8/40

(54) **VERFAHREN ZUM BETREIBEN EINER BREMSANLAGE FÜR KRAFTFAHRZEUGE SOWIE BREMSANLAGE**
METHOD FOR OPERATING A BRAKE SYSTEM FOR MOTOR VEHICLES, AND BRAKE SYSTEM
PROCEDE DE FONCTIONNEMENT D'UN SYSTEME DE FREINAGE DE VEHICULES AUTOMOBILES, ET SYSTEME DE FREINAGE

(30) Priorität: 06.03.2012 DE 102012203492; 04.03.2013 DE 102013203594
(43) Veröffentlichungstag der Anmeldung: 14.01.2015
(73) Patentinhaber: Continental Teves AG&Co. Ohg, 60488 Frankfurt (DE)
(72) Erfinder: FEIGEL, Hans-Jörg, 61191 Rosbach (DE)
(86) Internationale Anmeldenummer: PCT/EP2013/054354
(87) Internationale Veröffentlichungsnummer: WO 2013/131887

(56) Entgegenhaltungen:
- EP-A1- 1 852 324
- EP-A1- 2 103 493
- EP-A2- 1 039 134
- WO-A1-01/98124
- WO-A1-97/23372
- WO-A1-2010/091883
- WO-A1-2011/029812
- DE-A1- 3 716 515
- US-A- 5 234 261

## Beschreibung

Die Erfindung betrifft ein Verfahren zum Betreiben einer Bremsanlage gemäß dem Oberbegriff des Anspruchs 1 sowie eine Bremsanlage gemäß dem Oberbegriff des Anspruchs 14.

In der Kraftfahrzeugtechnik finden "Brake-by-wire"-Bremsanlagen eine immer größere Verbreitung. Solche Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" eine Betätigung der Radbremsen oder des Hauptbremszylinders stattfindet. Um dem Fahrzeugführer in der Betriebsart "Brake-by-wire" ein angenehmes Pedalgefühl zu vermitteln, umfassen die Bremsanlagen üblicherweise eine Bremspedalgefühl-Simulationseinrichtung. Bei diesen Bremsanlagen können die Radbremsen auch ohne aktives Zutun des Fahrzeugführers aufgrund elektronischer Signale betätigt werden. Diese elektronischen Signale können beispielsweise von einem elektronischen Stabilitätsprogramm oder einem Abstandsregelsystem ausgegeben werden.

Aus der internationalen Patentanmeldung WO 2011/029812 A1 ist eine "Brake-by-wire"-Bremsanlage mit einem bremspedalbetätigbaren Hauptbremszylinder, einem Wegsimulator und einer Druckbereitstellungseinrichtung bekannt. Die Radbremsen werden in einer "Brake-by-wire"-Betriebsart durch die Druckbereitstellungseinrichtung mit Druck beaufschlagt. In einer Rückfallbetriebsart werden die Radbremsen mittels des Bremspedal betätigbaren Hauptbremszylinders mit Druck beaufschlagt. Die Bremsanlage umfasst je Radbremse ein Einlass- und ein Auslassventil zum Einstellen radindividueller Bremsdrücke. Ein Verfahren zur Ansteuerung dieser Ventile wird nicht beschrieben.

In der WO 01/98124 A1 wird ein Verfahren zur Ansteuerung eines elektronisch regelbares Bremsbetätigungssystems mit mittels einer elektrischen Größe analog ansteuerbaren Druckregelventilen offenbart. Dabei wird bei der Ansteuerung eines Druckregelventils eine von der an ihm anliegenden hydraulischen Differenzdruck abhängige Begrenzung der elektrischen Größe durchgeführt.

Die Funktionsweise eines magnetspulenbetätigten, stromlos geschlossenen Drucksteuerventils und die Steuerung der Strömungsmenge des Fluids durch das Drucksteuerventil anhand des Steuerns des elektrischen Stroms, der auf die Magnetspule aufgebracht wird, wird in der EP 1 039 134 A2 beschrieben. Das Ventilelement wird zu einer Gleichgewichtsposition hin bewegt, in der eine Summe der Kraft auf der Grundlage der Fluiddruckdifferenz und der elektromagnetischen Kraft, die durch die Magnetspule erzeugt wird, gleich der Vorspannkraft der Ventilfeder ist.

Die WO 97/23372 A1 betrifft eine hydraulische Fremdkraftfahrzeugbremsanlage mit einer zwischen einer Fremdenergiequelle mit Hochdruckspeicher und einer Radbremse sowie einem Reservoir angeordneten, elektrisch steuerbaren Ventilanordnung mit einem stromlos geschlossenen Rad-Einlassventil. Zum Erhöhen des Bremsdrucks in der Radbremse wird in der Erregerspule des Einlassventils ein Magnetfeld erzeugt, das auf den Anker wirkt, so dass dieser wenigstens einen Teil der Schließkraft der Schließfeder des Einlassventils kompensiert. Die Erregung der Erregerspule bewirkt also wenigstens vorübergehend ein Kraftungleichgewicht, das zum Entfernen des Schließkörpers vom Ventilsitz und dadurch zu einem Druckmittelfluss hin in die Radbremse führt mit der Folge, dass in der Radbremse ein Radbremsdruckanstieg erfolgt und dadurch ein ursprünglich vorhandenes Druckgefälle über dem Einlassventil kleiner wird, bis schließlich wegen der dadurch stromabseitigen hydraulischen Beaufschlagung des Schließkörpers die Schließfeder in der Lage ist, den Ventilsitz mittels des Schließkörpers abzudichten.

In der WO 2010/091883 A1 wird ein Bremssystem mit einem Bremskraftverstärker, dessen Kolben-Zylindersystem mechanisch von einem Elektromotor angetrieben ist, offenbart, wobei je Radbremse ein einziges 2/2-Wege-Schaltventil, sogenanntes Multiplexventil, zur Einstellung eines radindividuellen Bremsdruckes vorgesehen ist. Beim Multiplex-verfahren erfolgt die Druckeinstellung an den einzelnen Radbremsen sequenziell, wobei die Druckeinstellung mittels Vor- und Rückhub des Kolbens des Kolben-Zylindersystems erfolgt. Als nachteilig wird hierbei die nicht unerhebliche Geräuschentwicklung angesehen, die unter anderem dadurch entsteht, dass zum einen der Elektromotor mit hoher Frequenz Reversiervorgänge des Kolben-Zylindersystems durchführen muss, und dass zum anderen die Multiplexventile in schneller Folge geschlossen und geöffnet werden müssen, was zu Anschlaggeräuschen innerhalb der Multiplexventile führt.

Es ist daher Aufgabe der vorliegenden Erfindung, ein Verfahren zum Betrieb einer Bremsanlage sowie eine Bremsanlage bereitzustellen, welches/welche eine fein dosierte Regelung der Bremsdrücke der Radbremsen bei möglichst geringer Geräuschentwicklung ermöglicht.

Diese Aufgabe wird erfindungsgemäß durch ein Verfahren gemäß Anspruch 1 und eine Bremsanlage gemäß Anspruch 14 gelöst.

Der Erfindung liegt der Gedanke zugrunde, dass zu Beginn einer radindividuellen Bremsdruckregelung alle Einlassventile geschlossen werden und dass ein Druckaufbau auf einen vorgegebene Druckwert in einer vorbestimmten Gruppe von ein oder mehreren Radbremsen durch Verschieben eines Druckmittelvolumens in die vorbestimmte Gruppe von Radbremsen mittels der Druckbereitstellungseinrichtung durchgeführt wird, wobei jedes Einlassventil der ein oder mehreren Radbremsen der vorbestimmte Gruppe derart angesteuert wird, dass das Einlassventil überströmt wird, und wobei jedes Einlassventil der übrigen, nicht zur vorbestimmten Gruppe gehörenden, Radbremsen derart angesteuert wird, dass das Einlassventil geschlossen bleibt.

Ein Vorteil der Erfindung ist es, dass die Anschlaggeräusche der Einlassventile deutlich verringert werden, da die Einlassventile kontinuierlich geschlossen sind und beim Druckaufbau nur überströmt werden. Es findet kein Anschlagen am hinteren Anschlag beim Öffnen der Einlassventile statt und bei Beendigung des Druckaufbaus Schließen die überströmten Einlassventile langsam und kraftarm.

Die Einlassventile sind analogisierte oder analog angesteuerte Einlassventile, welche jeweils mittels einer elektrischen Ansteuergröße angesteuert werden. Bevorzugt werden die Einlassventile mittels eines Ansteuerstrom betätigt. Im nicht angesteuerten Zustand sind die Einlassventile geöffnet (z.B. stromlos offen ausgeführt). So kann durch entsprechende Wahl des Wertes der Ansteuergröße vorgegeben werden, ob bzw. bei welchem Druck der Druckbereitstellungseinrichtung ein geschlossenes Einlassventil mittels der Druckbereitstellungseinrichtung überströmt werden kann oder nicht. Genauer gesagt, wird die auf den Ventilkolben wirkende Kraft, die ihrerseits den zum Öffnen des Einlassventils erforderlichen Überströmdruck vorgibt, durch den Wert (Höhe) der dem Einlassventil zugeführten elektrischen Ansteuergröße bestimmt.

Zur möglichst genauen Ansteuerung der Einlassventile ist bevorzugt für jedes Einlassventil eine Ansteuercharakteristik, welche eine Abhängigkeit der elektrischen Ansteuergröße von einem an dem Einlassventil anliegenden Differenzdruck oder Druck beschreibt, vorgegeben. Die Ansteuercharakteristiken können werksseitig bestimmt werden und in einer elektronischen Steuer- und Regeleinheit, z.B. der Bremsanlage, abgespeichert sein. Besonders bevorzugt werden die Ansteuercharakteristiken der einzelnen Einlassventile während des Fahrzeug-Betriebs mittels der Druckbereitstellungseinrichtung vermessen und in der elektronischen Steuer- und Regeleinheit abgespeichert, um so für die Druckregelung verfügbar zu sein.

Die Bremsanlage umfasst je Radbremse ein Auslassventil. Mittels der Auslassventile können Anforderungen zum Druckabbau in einer oder mehreren Radbremsen unabhängig voneinander und zeitgleich zu einem Druckaufbau in einem anderen Rad durchgeführt werden. Vorteilhafterweise verbinden die Auslassventile die Radbremsen mit einem Druckmittelvorratsbehälter. Besonders bevorzugt sind die Auslassventile stromlos geschlossen ausgeführt, d.h. im nicht angesteuerten Zustand in einem gesperrten Zustand.

Das von der Druckbereitstellungseinrichtung für den Druckaufbau auf einen vorgegebenen Druckwert in die vorbestimmte Gruppe zu verschiebende Druckmittelvolumen wird bevorzugt anhand des oder der Druck-Volumen-Zusammenhänge und des oder der Solldrücke der ein oder mehreren Radbremsen der vorbestimmten Gruppe bestimmt. Besonders bevorzugt ergibt sich das zu verschiebende Druckmittelvolumen als das Radaufnahmevolumen der einzigen Radbremse der vorbestimmten Gruppe oder als Summe der Radaufnahmevolumina der mehreren Radbremsen der vorbestimmten Gruppe. Dabei wird jedes Radaufnahmevolumen anhand des vorgegebenen Druckwerts aus dem Druck-Volumen-Zusammenhang der entsprechenden Radbremse bestimmt.

Gemäß einer Weiterbildung der Erfindung erfolgt das Verschieben des Druckmittelvolumens durch eine Volumensteuerung oder Positionssteuerung (Wegsteuerung) der Druckbereitstellungseinrichtung. Die Steuerung wird vorteilhafterweise unter Berücksichtigung des oder der Druck-Volumen-Zusammenhänge und des oder der Solldrücke der ein oder mehreren Radbremsen der vorbestimmten Gruppe durchgeführt.

Um die Drücke in den Radbremsen auf die gewünschten, radindividuellen Solldrücke aufzubauen, wird in verschiedenen Gruppen von einzelnen oder mehreren Radbremsen ein Druckaufbau zeitlich nacheinander durchgeführt. Hierzu werden in aufeinanderfolgen Zeitintervallen verschiedene Gruppen von ein oder mehreren Radbremsen der vorbestimmten Gruppe zugeordnet und ein Druckaufbau wird durch Überströmen der Einlassventile der Radbremsen der jeweils vorbestimmten Gruppe durchgeführt.

Soll der Druck an den ein oder mehreren Radbremsen der vorbestimmten Gruppe auf einen vorgegebene Enddruck aufgebaut werden, so werden bevorzugt die ein oder mehreren Einlassventile dieser Radbremsen der vorbestimmten Gruppe jeweils mit einer Ansteuergröße angesteuert, deren Wert mindestens einen Schwellenwert besitzt, der dem Differenzdruck zwischen dem vorgegebenen Enddruck und dem geringsten aktuellen Druck in einer der übrigen Radbremsen, welche nicht der vorbestimmten Gruppe angehören, entspricht. Durch die beschriebene Wahl des Wertes der Ansteuergröße wird sichergestellt, dass das oder die Einlassventile der vorbestimmten Gruppe geschlossen sind.

Weiterhin ist es bevorzugt, dass die Ansteuergröße den jeweiligen Schwellenwert um nicht mehr als einen vorgegebenen Betrag übersteigt, um ein leichtes Überströmen des Einlassventils durch die Druckbereitstellungseinrichtung zu gewährleisten.

Für jedes Einlassventil wird bevorzugt ein dem Differenzdruck entsprechender Schwellenwert aus der vorgegebenen Ansteuercharakteristik des Einlassventils bestimmt. Besonders bevorzugt ist hierfür die Schließkennlinie des Einlassventils vorgegeben.

Um in einer Gruppe von zwei oder mehr vorgegebenen Radbremsen einen Druckaufbau auf unterschiedliche, radindividuelle Solldrücke durchzuführen, wird bevorzugt wie folgt vorgegangen. Zunächst werden alle vorgegebenen Radbremsen der vorbestimmten Gruppe zugewiesen und es wird ein gleichzeitiger Druckaufbau auf den niedrigsten Solldruck der Solldrücke der vorgegebenen Radbremsen durch Überströmen der Einlassventile der Radbremsen der vorbestimmten Gruppe durchgeführt. Nachdem das entsprechende vorbestimmte Druckmittelvolumen in die vorbestimmte Gruppe verschoben wurde, wird jedes Einlassventil derjenigen Radbremsen der vorbestimmten Gruppe, deren Solldruck dem niedrigsten Solldruck entspricht, derart angesteuert, dass das Einlassventil nicht mehr überströmt wird. Diejenigen vorgegebenen Radbremsen mit einem Solldruck, der höher als der niedrigste Solldruck ist, werden dann der (neuen) vorbestimmten Gruppe zugewiesen und in dieser (neuen) vorbestimmten Gruppe wird ein Druckaufbau auf den nächst höheren Solldruck durch Überströmen der Einlassventile der entsprechenden Radbremsen durchgeführt.

Gemäß einer Weiterbildung der Erfindung wird der von der Druckbereitstellungseinrichtung bereitgestellte Bremssystemdruck bestimmt und zur Überwachung herangezogen.

Die Druckbereitstellungseinrichtung wird bevorzugt derart angesteuert oder eingeregelt, dass der von der Druckbereitstellungseinrichtung bereitgestellte Bremssystemdruck jederzeit größer als der größte Druck in einer der Radbremsen ist. Hierdurch wird verhindert, dass Druckmittel über die Rückschlagventile aus den Radbremsen entweicht.

Bevorzugt wird das Verfahren in einer Bremsanlage mit zwei oder mehr Bremskreisen durchgeführt, bei welcher jeder Bremskreis über eine hydraulische Verbindungsleitung mit einem, vorteilhafterweise stromlos offenen, Trennventil mit einem Hauptbremszylinder und über eine weitere hydraulische Verbindungsleitung mit einem, vorteilhafterweise stromlos geschlossenen, Zuschaltventil mit der Druckbereitstellungseinrichtung verbunden ist.

Das von der Druckbereitstellungseinrichtung abgegebene Druckmittelvolumen wird bevorzugt mittels einer an oder in der Druckbereitstellungseinrichtung angeordneten Wegerfassungseinrichtung oder Lagenerfassungseinrichtung bestimmt bzw. überwacht.

Die Erfindung betrifft auch eine Bremsanlage, in der ein erfindungsgemäßes Verfahren durchgeführt wird.

Bevorzugt wird die Druckbereitstellungseinrichtung der Bremsanlage durch eine Zylinder-Kolben-Anordnung gebildet, deren Kolben durch einen elektromechanischen Aktuator betätigbar ist. Dabei wird vorteilhafterweise das von der Druckbereitstellungseinrichtung abgegebene oder aufgenommene Druckmittelvolumen mittels einer Wegerfassungseinrichtung oder einer Lagenerfassungseinrichtung bestimmt, welche eine eine Position oder Lage des Kolbens charakterisierende Größe erfasst.

Alternativ ist es bevorzugt, dass die Druckbereitstellungseinrichtung durch eine Zwei- oder Mehr-Kolben-Pumpe gebildet wird, welche einen Pumpenpositionssensor umfasst.

Bevorzugt umfasst die Bremsanlage einen Drucksensor zur Erfassung des von der Druckbereitstellungseinrichtung gelieferten Bremssystemdrucks.

Bevorzugt handelt es sich um eine Bremsanlage für Kraftfahrzeuge, die in einer sog. "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, in der nur der Betrieb durch den Fahrzeugführer möglich ist.

Weitere bevorzugte Ausführungsformen der Erfindung ergeben sich aus den Unteransprüchen und der nachfolgenden Beschreibung anhand von Figuren.

Es zeigen schematisch
- Fig. 1: eine beispielsgemäße Bremsanlage zur Durchführung eines erfindungsgemäßen Verfahrens,
- Fig. 2: einen Ausschnitt der beispielsgemäßen Bremsanlage der Fig. 1 zur Erläuterung eines ersten Ausführungsbeispiels eines erfindungsgemäßen Verfahrens,
- Fig. 3: einen Ausschnitt der beispielsgemäßen Bremsanlage der Fig. 1 zur Erläuterung eines zweiten Ausführungsbeispiels eines erfindungsgemäßen Verfahrens,
- Fig. 4: einen Ausschnitt der beispielsgemäßen Bremsanlage der Fig. 1 zur Erläuterung eines dritten Ausführungsbeispiels eines erfindungsgemäßen Verfahrens, und
- Fig. 5: einen Ausschnitt einer weiteren beispielsgemäßen Bremsanlage zur Durchführung eines erfindungsgemäßen Verfahrens.

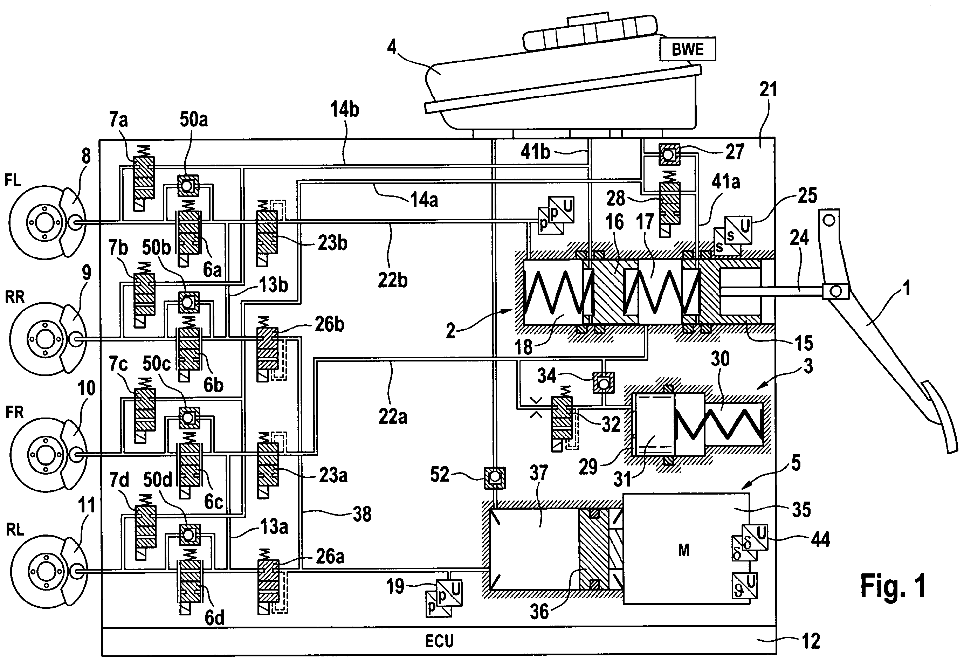

In Fig. 1 ist eine beispielsgemäße Bremsanlage zur Durchführung eines erfindungsgemäßen Verfahrens schematisch dargestellt. Diese umfasst im Wesentlichen eine mittels eines Betätigungs- bzw. Bremspedals 1 betätigbare hydraulische Betätigungseinheit 2, einen mit der hydraulischen Betätigungseinheit 2 zusammen wirkenden Wegsimulator bzw. Simulationseinrichtung 3, einen der hydraulischen Betätigungseinheit 2 zugeordneten, unter Atmosphärendruck stehenden Druckmittelvorratsbehälter 4, eine elektrisch steuerbare Druckbereitstellungseinrichtung 5, eine elektronische Steuer- und Regeleinheit 12 und eine elektrisch steuerbare Druckmodulationseinrichtung.

Die Druckmodulationseinrichtung umfasst beispielsgemäß je Radbremse 8, 9, 10, 11 eines nicht dargestellten Kraftfahrzeuges ein Einlassventil 6a-6d und ein Auslassventil 7a-7d, die paarweise über Mittenanschlüsse hydraulisch zusammengeschaltet und an die Radbremsen 8, 9, 10, 11 angeschlossen sind. Die Eingangsanschlüsse der Einlassventile 6a-6d werden mittels Bremskreisversorgungsleitungen 13a, 13b mit Drücken versorgt, die in einer "Brake-by-Wire"-Betriebsart aus einem Bremssystemdruck abgeleitet werden, der in einer an einen Druckraum 37 der elektrisch steuerbaren Druckbereitstellungseinrichtung 5 angeschlossenen Systemdruckleitung 38 vorliegt. In einer Rückfallbetriebsart werden die Bremskreisversorgungsleitungen 13a, 13b über hydraulische Leitungen 22a, 22b mit den Drücken der Druckräume 17, 18 der Betätigungseinheit 2 beaufschlagt. Die Ausgangsanschlüsse der Auslassventile 7a-7d sind paarweise über Rücklaufleitungen 14a, 14b mit dem Druckmittelvorratsbehälter 4 verbunden. Die beiden Bremskreise sind beispielsgemäß diagonal aufgeteilt. Der erste Bremskreis (13a) umfasst die Radbremsen vorne rechts 10 (FR) und hinten links 11 (RL), der zweite Bremskreis (13b) die Radbremsen vorne links 8 (FL) und hinten rechts 9 (RR).

Aus sicherheitstechnischen Gründen, da der Druck in den Radbremsen 8-11 unter allen Umständen gelöst werden können sollte, ist den Einlassventilen 6a-6d jeweils ein zu den Bremskreisversorgungsleitungen 13a, 13b hin öffnendes Rückschlagventil 50a-50d parallel geschaltet. Die Rückschlagventile 50a-50d gewährleisten, dass ein Radbremsdruck nie höher als der Druck der Druckbereitstellungseinrichtung 5 ist. Dadurch kann - anders als in einer Bremsanlage mit Multiplexventilen - nicht mittels Druckabsenkung der Druckbereitstellungseinrichtung ein Radbremsdruck abgesenkt werden, ohne dass nicht gleich alle Radbremsdrücke ebenfalls abgesenkt werden.

Die hydraulische Betätigungseinheit 2 weist in einem Gehäuse 21 zwei hintereinander angeordnete Kolben 15, 16 auf, die hydraulische Kammern bzw. Druckräume 17, 18 begrenzen, die zusammen mit den Kolben 15, 16 einen zweikreisigen Hauptbremszylinder bzw. einen Tandemhauptzylinder bilden. Die Druckräume 17, 18 stehen einerseits über in den Kolben 15, 16 ausgebildete radiale Bohrungen sowie entsprechende Druckausgleichsleitungen 41a, 41b mit dem Druckmittelvorratsbehälter 4 in Verbindung, wobei diese durch eine Relativbewegung der Kolben 17, 18 im Gehäuse 21 absperrbar sind, und andererseits mittels der hydraulischen Leitungen 22a, 22b mit den bereits genannten Bremskreisversorgungsleitungen 13a, 13b in Verbindung, über die die Einlassventile 6a-6d an die Betätigungseinheit 2 angeschlossen ist. Dabei ist in der Druckausgleichsleitung 41a eine Parallelschaltung eines stromlos offenen (SO-) Diagnoseventils 28 mit einem zum Druckmittelvorratsbehälter 4 hin schließenden Rückschlagventil 27 enthalten. Eine Kolbenstange 24 koppelt die Schwenkbewegung des Bremspedals 1 infolge einer Pedalbetätigung mit der Translationsbewegung des ersten (Hauptzylinder-)Kolbens 15, dessen Betätigungsweg von einem vorzugsweise redundant ausgeführten Wegsensor 25 erfasst wird. Dadurch ist das entsprechende Kolbenwegsignal ein Maß für den Bremspedalbetätigungswinkel. Es repräsentiert einen Bremswunsch eines Fahrzeugführers.

In den an die Druckräume 17, 18 angeschlossenen Leitungsabschnitten 22a, 22b ist je ein Trennventil 23a, 23b angeordnet, welches als je ein elektrisch betätigbares, vorzugsweise stromlos offenes (SO-) Ventil ausgebildet ist. Durch die Trennventile 23a, 23b kann die hydraulische Verbindung zwischen den Druckräumen 17, 18 und den Bremskreisversorgungsleitungen 13a, 13b, z.B. in der Normalbremsfunktion / "Brake-by-wire"-Betriebsart, abgesperrt werden. Ein an den Leitungsabschnitt 22b angeschlossener Drucksensor 20 erfasst den im Druckraum 18 durch ein Verschieben des zweiten Kolbens 16 aufgebauten Druck.

Wegsimulator 3 ist hydraulisch an den Hauptbremszylinder 2 angekoppelt und besteht im Wesentlichen aus einer Simulatorkammer 29, einer Simulatorfederkammer 30 sowie einem die beiden Kammern 29, 30 voneinander trennenden Simulatorkolben 31. Simulatorkolben 31 stützt sich durch ein in Simulatorfederkammer 30 angeordnetes elastisches Element (z.B. eine Feder), welches vorteilhafterweise vorgespannt ist, am Gehäuse 21 ab. Die Simulatorkammer 29 ist mittels eines elektrisch betätigbaren Simulatorfreigabeventils 32 mit dem ersten Druckraum 17 des Tandemhauptbremszylinders 2 verbindbar. Bei Vorgabe einer Pedalkraft und aktiviertem Simulatorfreigabeventil 32 strömt Druckmittel vom Hauptbremszylinder-Druckraum 17 in die Simulatorkammer 29. Ein hydraulisch antiparallel zum Simulatorfreigabeventil 32 angeordnetes Rückschlagventil 34 ermöglicht unabhängig vom Schaltzustand des Simulatorfreigabeventils 32 ein weitgehend ungehindertes Zurückströmen des Druckmittels von der Simulatorkammer 29 zum Hauptbremszylinder-Druckraum 17.

Die elektrisch steuerbare Druckbereitstellungseinrichtung 5 ist als eine hydraulische Zylinder-Kolben-Anordnung bzw. ein einkreisiger elektrohydraulischer Aktuator ausgebildet, dessen Kolben 36 von einem schematisch angedeuteten Elektromotor 35 unter Zwischenschaltung eines ebenfalls schematisch dargestellten Rotations-Translationsgetriebes betätigbar ist. Der Kolben 36 begrenzt einen Druckraum 37. Ein Nachsaugen von Druckmittel in den Druckraum 37 ist durch ein Zurückfahren des Kolbens 36 bei geschlossenen Zuschaltventilen 26a, 26b möglich, indem Druckmittel aus dem Druckmittelvorratsbehälter 4 über ein als in Strömungsrichtung zum Aktuator öffnendes Rückschlagventil ausgebildetes Nachsaugventil 52 in den Aktuatordruckraum 37 strömen kann.

Zur Erfassung einer für die Position/Lage des Kolbens 36 der Druckbereitstellungseinrichtung 5 charakteristischen Größe s ist ein Sensor 44 vorhanden, welcher beispielsgemäß als ein der Erfassung der Rotorlage des Elektromotors 35 dienender Rotorlagensensor ausgeführt ist. Andere Sensoren sind ebenso denkbar, z.B. ein Wegsensor zur Erfassung der Position/Lage des Kolbens 36. Anhand der für die Position/Lage des Kolbens 36 charakteristischen Größe ist eine Bestimmung des von der Druckbereitstellungseinrichtung 5 abgegebenen oder aufgenommenen Druckmittelvolumens V möglich. Zum Erfassen des von der Druckbereitstellungseinrichtung 5 erzeugten Druckes P ist ein vorzugsweise redundant ausgeführter Drucksensor 19 vorgesehen.

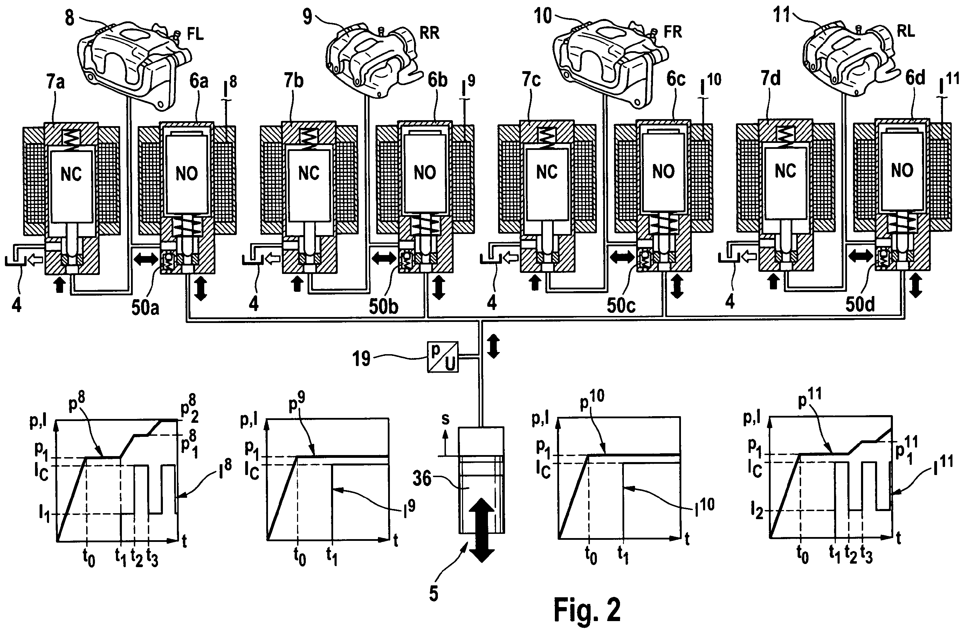

In Fig. 2 ist ein Ausschnitt der beispielsgemäßen Bremsanlage der Fig. 1 zur Erläuterung eines ersten Ausführungsbeispiels eines erfindungsgemäßen Verfahrens schematisch dargestellt. Es sind die Druckbereitstellungseinrichtung 5 mit Kolben 36, der Drucksensor 19 zur Bestimmung des Bremssystemdruckes P der Druckbereitstellungseinrichtung, die Radbremsen FL, RR, FR, RL bzw. 8, 9, 10, 11, die Einlassventile 6a-6d mit parallel geschalteten Rückschlagventilen 50a-50d, welche jeweils in der hydraulischen Verbindung zwischen Druckbereitstellungseinrichtung 5 und Einlassventil angeordnet sind, und die Auslassventile 7a-7d dargestellt, welche jeweils in der hydraulischen Verbindung zwischen Radbremse und Druckmittelvorratsbehälter angeordnet sind. Unterhalb der jeweiligen Radbremse 8, 9, 10, 11 sind weiterhin Diagramme mit dem jeweiligen zeitlichen Verlauf der Ansteuergröße I der Einlassventile 6a, 6b, 6c, 6d, welche mit I⁸, I⁹, I¹⁰, I¹¹ bezeichnet sind, sowie des Radbremsdrucks p der einzelnen Radbremsen 8, 9, 10, 11, welche mit p⁸, p⁹, p¹⁰, p¹¹ bezeichnet sind, dargestellt. Beispielsgemäß werden die Einlassventile mit einem Strom angesteuert, weshalb im Folgenden der Begriff Ansteuerstrom I verwendet wird.

Vom Zeitpunkt t=0 bis zum Zeitpunkt t=tₒ wird durch die Druckbereitstellungseinrichtung der Bremsdruck in allen Radbremsen 8, 9, 10, 11 gemeinsam und gleichzeitig von Null auf einen Wert P₁ aufgebaut und dann auf dem Druckniveau P₁ bis Zeitpunkt t=t₁ konstant gehalten. Es wird also beispielsgemäß von einem zunächst in allen Radbremsen 8, 9, 10, 11 gleichen Druck P₁ ausgegangen, welcher gleich dem Druck der Druckbereitstellungseinrichtung 5 ist. Danach soll an den Radbremsen 8 und 11 ein Bremsdruckaufbau auf unterschiedliche Solldrücke durchgeführt werden, während der Druck in den Radbremsen 9 und 10 gehalten werden soll (Solldrücke p⁹ₛₒₗₗ = p¹⁰_{Soll} =P₁). Diese radindividuellen Solldrücke bzw. zeitlichen Solldruckverläufe pⁿₛₒₗₗ (n=8, 9, 10 oder 11) für die Radbremsen 8, 9, 10, 11 werden, z.B. von einer Regelfunktion der Bremsanlage (z.B. einer Antiblockierfunktion (ABS: Antiblockiersystem), einer Fahrdynamikregelfunktion (ESC: Elektronic Stability Control), einer Abstandsregelfunktion (ACC: Active Cruise Control), o.ä.), vorgegeben.

Zu Beginn der radindividuellen Bremsdruckregelung zum Zeitpunkt t₁ werden alle Einlassventile 6a, 6b, 6c, 6d geschlossen, d.h. mit einem Ansteuerstrom größer Null angesteuert. Gemäß dem ersten Ausführungsbeispiel eines erfindungsgemäßen Verfahrens wird der Druckaufbau an den beiden Radbremsen 8 und 11 sequenziell durchgeführt, d.h. es wird zuerst ein Druckaufbau nur an Radbremse 8 ("aktive" Radbremse bzw. erste vorbestimmte (ausgewählte) Gruppe A₁ von Radbremsen), dann ein Druckaufbau nur an Radbremse 11 (nächste "aktive" Radbremse bzw. zweite vorbestimmte Gruppe A₂), dann wieder ein Druckaufbau nur an Radbremse 8 (dritte vorbestimmte Gruppe A₃) und so weiter durchgeführt. D.h. die Druckaufbau-Phasen der vorbestimmten Gruppen A₁, A₂, A₃, ... werden sequenziell durchgeführt.

Da zuerst an Radbremse 8 ein Druckaufbau durchgeführt werden soll, ist Radbremse 8 einziges Mitglied der ersten vorbestimmmten Gruppe A₁ von Radbremsen. Die Einlassventile 6b, 6c, 6d der nicht zur Gruppe A₁ gehörenden Radbremsen 9, 10, 11 werden zum Zeitpunkt t₁ (bis zum Zeitpunkt t₂) derart angesteuert, dass die Einlassventile 6b, 6c, 6d geschlossen sind und nicht überströmt werden können. Die entsprechenden Ansteuerströme I⁹, I¹⁰, I¹¹ werden daher auf einen Stromwert I_{c} eingestellt, der das geschlossen bleiben der Einlassventile 6b, 6c, 6d sicher stellt. Das Einlassventil 6a der Radbremse 8 der ersten vorbestimmten Gruppe A₁ wird derart angesteuert, dass das Einlassventil 6a geschlossen, aber mittels der Druckbereitstellungseinrichtung 5 überströmbar ist. Der Ansteuerstrom I⁸, wird daher auf einen Stromwert I₁ eingestellt, der kleiner als der Wert I_{c} ist. Das Einlassventil 6a wird mit mindestens dem Stromwert (Schwellenwert I_{grenz}) beaufschlagt, der dem Differenzdruck zwischen dem Solldruck p⁸₁, auf den hin der Radbremsdruck erhöht werden soll, und dem kleinsten bekannten Radbremsdruck in einem anderen Radbremskreis, hier also P₁, entspricht. Der Schwellenwert kann z.B. anhand der vorgegebenen Schließkennlinie des Einlassventils bestimmt werden. Der am Einlassventil 6a eingestellte Stromwert I₁ ist also größer gleich dem ventilabhängigen Schwellenwert I_{grenz} (I₁ ≥ I_{grenz}). Der Ansteuerstromwert I₁ wird aber auch nicht wesentlich oberhalb dieses Mindestwertes I_{grenz} gewählt, so dass ein Überströmen des Ventils 6a leicht möglich ist.

Der Druckaufbau in der Radbremse 8 auf den vorgegebene Solldruckwert p⁸₁ wird durch Verschieben eines Druckmittelvolumens V_{A} in die vorbestimmte Gruppe A₁, d.h. in die Radbremse 8, mittels der Druckbereitstellungseinrichtung 5 durchgeführt. Aufgrund der oben beschriebenen Wahl der Ansteuerströme wird dabei das Einlassventil 6a der Radbremse 8 überströmt und die Einlassventile 6b, 6c, 6d der übrigen Radbremsen 9, 10, 11 bleiben geschlossen, d.h. die Ventile geben nicht dem Bremssystemdruck nach und öffnen nicht. Das Überströmen erfolgt mittels Volumen- bzw. Positionssteuerung der Druckbereitstellungseinrichtung 5. Hierzu ist für jede Radbremse n, n=8, 9, 10 oder 11, ein Druck-Volumen-Zusammenhang Fⁿ vorgegeben, welcher den Druckmittelbedarf bzw. die Druckmittelvolumenaufnahme (Radaufnahmevolumen) Vⁿ der Radbremse n in Abhängigkeit vom Bremsdruck pⁿ beschreibt (Vⁿ=Fⁿ (p^{s})) . Die Druck-Volumen-Zusammenhänge sind z.B. in einer elektronischen Steuer- und Regeleinheit abgespeichert. Beispielsgemäß wird unter Berücksichtigung des vorgegebenen Druck-Volumen-Zusammenhangs F⁸ der Radbremse 8 das dem Solldruck p⁸₁ zugeordnete Radaufnahmevolumen V⁸ bestimmt und das entsprechende Volumen V_{A} über das Einlassventil 6a mittels der Druckbereitstellungseinrichtung 5 in die Radbremse 8 hineindrückt. Nach erfolgtem Verschieben des Druckmittelvolumens V_{A} bzw. erfolgtem Druckaufbau an Radbremse 8 wird zum Zeitpunkt t₂ das Einlassventil 6a der Radbremse 8 fest geschlossen, d.h. der Ansteuerstrom I⁸ auf den Wert I_{c} erhöht.

Eine Plausibilisierung des Vorgangs kann noch über die Beobachtung des (mittels Drucksensor 19) sensierten Bremssystemdruckes P und den Strom-Druck-Kalibrierdaten des Einlassventils 6a erfolgen (Bremssystemdruck = Soll-Radbremsdruck + Solldruckdifferenz am Ventil).

Da der Bremssystemdruck P immer über allen Radbremsdrücken Pⁿ liegt, kann auch kein Druckmittelvolumen über die Rückschlagventile 50a-50d entweichen.

Beispielsgemäß erfolgt vom Zeitpunkt t₂ bis zum Zeitpunkt t₃ ein Druckaufbau an Radbremse 11 auf einen vorgegebenen Solldruck p¹¹₁. Radbremse 11 ist also einziges Mitglied einer zweiten vorbestimmmten Gruppe A₂ von Radbremsen. Die Einlassventile 6a, 6b, 6c der nicht zur Gruppe A₂ gehörenden Radbremsen 8, 9, 10 werden zum Zeitpunkt t₂ (bis zum Zeitpunkt t₃) derart angesteuert, dass die Einlassventile 6a, 6b, 6c geschlossen sind und nicht überströmt werden können. Die Ansteuerströme I⁸, I⁹, I¹⁰ der nicht zur vorbestimmten Gruppe A₂ gehörenden Radbremsen werden bzw. bleiben daher auf einen Stromwert I_{c} eingestellt, der sicher stellt, dass die Einlassventile 6a, 6b, 6c nicht dem Druck der Druckbereitstellungseinrichtung nachgeben und öffnen. Das Einlassventil 6d der Radbremse 11 der zweiten vorbestimmten Gruppe A₂ wird derart angesteuert, dass das Einlassventil 6d geschlossen, aber mittels der Druckbereitstellungseinrichtung 5 überströmbar ist. Der Ansteuerstrom I₈ wird daher auf einen Stromwert I₂ eingestellt, der kleiner als der Wert I_{c} ist. Die Wahl des Stromwerts I₂ entspricht der Vorgehensweise, welche oben für das Einlassventil 6a beschrieben wurde. Der Druckaufbau in der Radbremse 11 auf den vorgegebene Solldruckwert p¹¹₁ wird durch Verschieben eines Druckmittelvolumens V_{A} in die vorbestimmte Gruppe A₂, d.h. in die Radbremse 11, mittels der Druckbereitstellungseinrichtung 5 durchgeführt. Aufgrund der beschriebenen Wahl der Ansteuerströme wird dabei nur das Einlassventil 6d der Radbremse 11 überströmt. Das zu verschiebende Volumen V_{A} wird, entsprechend wie oben bereits beschrieben, unter Berücksichtigung des vorgegebenen Druck-Volumen-Zusammenhangs F¹¹ der Radbremse 11 und des Solldrucks p¹¹₁ bestimmt. Ab Zeitpunkt t₃ wird das Einlassventil 6d wieder fest verschlossen (Ansteuerstromwert I_{c}).

Nach erfolgtem Druckaufbau an Radbremse 11 erfolgt beispielsgemäß vom Zeitpunkt t₃ an wieder ein Druckaufbau an der Radbremse 8 auf einen vorgegebenen Solldruck p⁸₂ durch Überströmen des Einlassventils 6a, usw.

In dieser Art wird beispielsgemäß mittels der Druckbereitstellungseinrichtung 5 sequenziell der Druck in den beiden Radbremsen 8 und 11 aufgebaut. Es findet für jeweils eine Radbremse eine Druckaufbaudosierung durch Volumensteuerung bzw. Positionssteuerung der Druckbereitstellungseinrichtung 5 bzw. deren Aktuators statt, und zwar für die Untergruppe von Radbremsen mit dem größeren Radbremsdrucksollwert. Die Einlassventile 6c, 6d der Radbremsen 9, 10 mit dem niedrigeren Druckniveau, an welchen der Radbremsdruck gehalten oder auch abgebaut werden soll, sind die ganze Zeit über fest geschlossen (Ansteuerstrom der Einlassventile 6b, 6c gleich dem Wert I_{c}). In den Radbremsen 8 und 11 findet eine Druckaufbaudosierung mittels Multiplex-Aktuator-Wegsteuerung statt.

Beispielsgemäß wird also in verschiedenen Radbremsen 8, 11, 8, ... ein Druckaufbau sequenziell durchgeführt, wobei in aufeinanderfolgen Zeitintervallen verschiedene einzelne Radbremsen der vorbestimmten Gruppe A₁, A₂, A₃, ... angehören, in welcher ein Druckaufbau durch Überströmen des Einlassventils der Radbremse 8, 11, 8, ... durchgeführt wird.

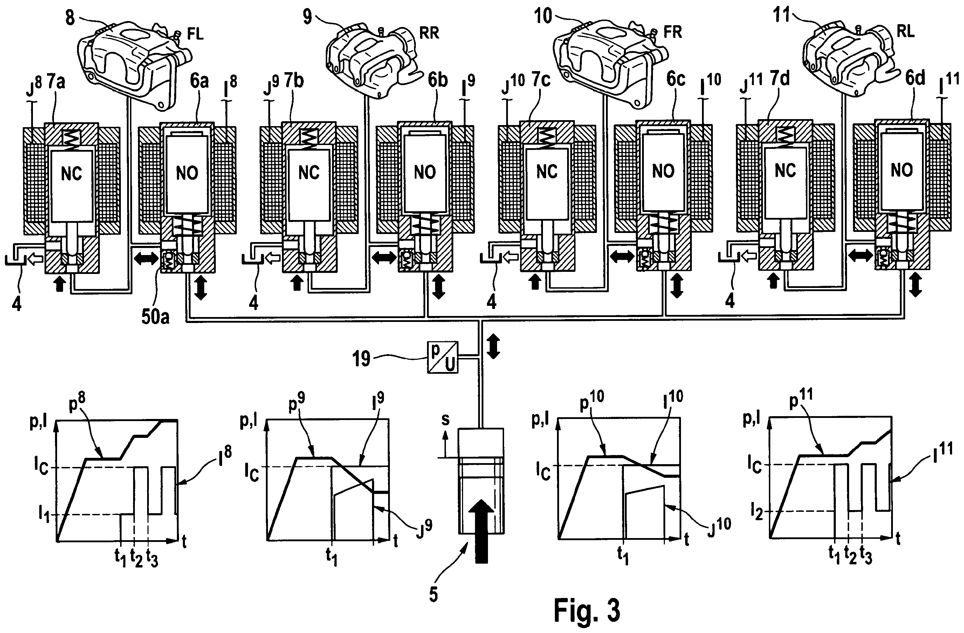

Fig. 3, anhand welcher ein zweites Ausführungsbeispiel eines erfindungsgemäßen Verfahrens erläutert wird, entspricht weitestgehend der Fig. 2. Im Unterschied zu Fig. 2 ist in den Diagrammen mit dem jeweiligen zeitlichen Verlauf des Ansteuerstroms I der Einlassventile 6a, 6b, 6c, 6d und dem Radbremsdruck p der Radbremsen 8, 9, 10, 11 zusätzlich für die Radbremsen 9 und 10 der zeitlichen Verlauf des Ansteuerstroms J der Auslassventile 7b, 7c dargestellt, welcher mit J⁹ und J¹⁰ bezeichnet wird. Der Ansteuerstrom J der Auslassventile 7a, 7d ist für die dargestellte Zeit Null und deshalb in den Diagrammen zu Radbremse 8 und 11 nicht dargestellt. Der Bremsdruckverlauf sowie das Verfahren zum Druckaufbau an den Radbremsen 8 und 11 entspricht dem von Fig. 2. Unabhängig von dem Druckaufbau an den Radbremsen 8, 11 wird beispielsgemäß eine Druckabsenkung an den Radbremsen 9 und 10 durchgeführt. Die Bestromung der Einlassventile 6a, 6b, 6c, 6d entspricht der Bestromung des in Fig. 2 dargestellten Beispiels. Zum Druckabbau an den Radbremsen 9 und 10 werden zum Zeitpunkt t₁ zusätzlich die stromlos geschlossenen Auslassventile 7b, 7c bestromt, so dass die Auslassventile 7b, 7c öffnen und Druckmittelvolumen in einen Druckmittelvorratsbehälter 4 abfließen kann. Beispielsgemäß sind die Auslassventile analogisierte oder analog angesteuerte Ventil. Es findet also an den Radbremsen 8, 11 eine Druckaufbaudosierung mittels Multiplex-Aktuator-Wegsteuerung und an den Radbremsen 9, 10 eine Druckabbaudosierung mittels Auslassventil-Drucksteuerung statt.

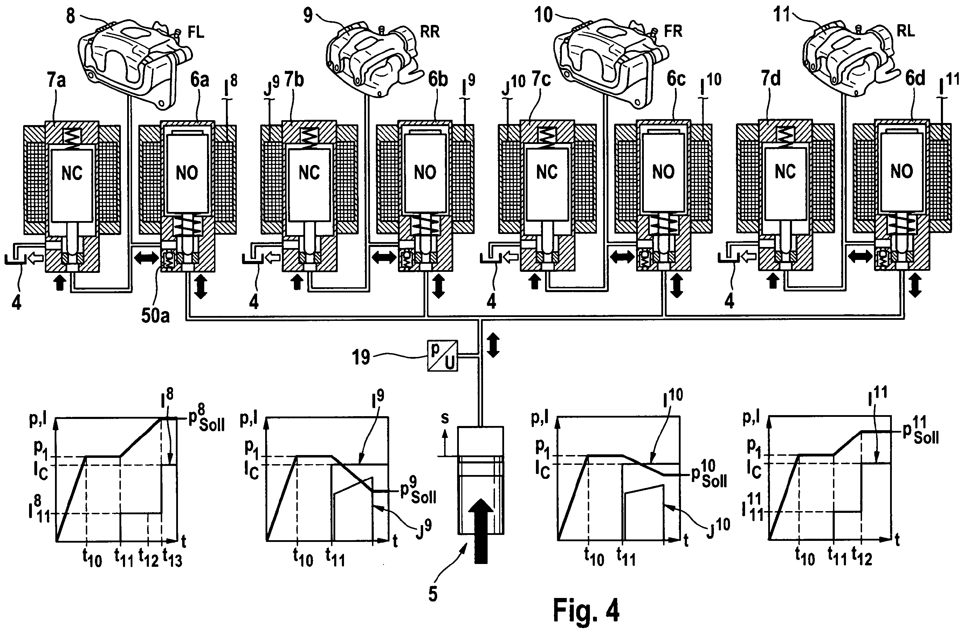

In Fig. 4 ist ein Ausschnitt der beispielsgemäßen Bremsanlage der Fig. 1 zur Erläuterung eines dritten Ausführungsbeispiels eines erfindungsgemäßen Verfahrens schematisch dargestellt. Der Ausschnitt der Bremsanlage entspricht dem der Fig. 2. Auch in Fig. 4 sind unterhalb der jeweiligen Radbremse 8, 9, 10, 11 Diagramme mit dem jeweiligen zeitlichen Verlauf der Ansteuergrößen (Ansteuerströme) I⁸, I⁹, I¹⁰, I¹¹ der Einlassventile 6a, 6b, 6c, 6d, der Radbremsdrück p⁸, p⁹, p¹⁰, p¹¹ der einzelnen Radbremsen 8, 9, 10, 11 sowie der Ansteuergrößen (Ansteuerströme) J⁹, J¹⁰ der Auslassventile 7b, 7c dargestellt. Vom Zeitpunkt t=0 bis zum Zeitpunkt t=t₁₀ wird durch die Druckbereitstellungseinrichtung der Bremsdruck in allen Radbremsen 8, 9, 10, 11 gemeinsam und gleichzeitig von Null auf einen Wert P₁ aufgebaut und dann auf dem Druckniveau P₁ bis Zeitpunkt t=t₁₁ konstant gehalten. Danach soll an den Radbremsen 8 und 11 ein Bremsdruckaufbau auf die unterschiedliche Solldrücke p⁸ₛₒₗₗ und p¹¹ₛₒₗₗ (mit p¹¹ₛₒₗₗ < p⁸ₛₒₗₗ) durchgeführt werden, während der Druck in den Radbremsen 9 und 10 auf unterschiedliche Solldrücke abgebaut soll.

Gemäß dem dritten Ausführungsbeispiel eines erfindungsgemäßen Verfahrens wird der Druckaufbau an den beiden Radbremsen 8 und 11 zumindest zeitweise simultan durchgeführt. Es wird zuerst ein simultaner Druckaufbau an den Radbremse 8 und 11 ("aktive" Radbremsen 8 und 11 bzw. erste vorbestimmte (ausgewählte) Gruppe A₁ von Radbremsen) durchgeführt. Dann wird der Druckaufbau nur an Radbremse 8 fortgesetzt ("aktive" Radbremse 8 bzw. zweite vorbestimmte Gruppe A₂). In dem Sinne werden die Druckaufbau-Phasen der vorbestimmten Gruppen A₁, A₂, ... auch hier sequenziell durchgeführt.

Zu Beginn der radindividuellen Bremsdruckregelung zum Zeitpunkt t₁₁ werden alle Einlassventile 6a, 6b, 6c, 6d geschlossen, d.h. mit einem Ansteuerstrom größer Null angesteuert. Dabei werden die Einlassventile 6b, 6c zu Radbremse 9, 10, welche nicht zu der ersten vorbestimmten Gruppe A₁ gehören, mit einem hohen Ansteuerstrom I⁹, I¹⁰ des Werts I_{c} geschlossen, der sicherstellt, dass die Ventile 6b, 6c nicht öffnen bzw. überströmt werden. Die Einlassventile 6a, 6d der Radbremsen 8, 11 der ersten vorbestimmten Gruppe A₁, an welchen der Druckaufbau gleichzeitig erfolgen soll, werden mit deutlich niedrigeren Ansteuerströmen der Größe I⁸₁₁ und I¹¹₁₁ geschlossen, was ein Überströmen der Einlassventile 6a, 6d mittels der Druckbereitstellungseinrichtung 5 ermöglicht. Hierbei werden die Einlassventile 8 und 11 mit Stromwerten beaufschlagt, die den gleichen Differenzdruck (dem niedrigsten aus der aktuellen Anforderung) repräsentieren. Der Druckaufbau in den Radbremsen 8, 11 der vorbestimmten Gruppe A₁ auf den niedrigsten vorgegebene Solldruckwert p¹¹ₛₒₗₗ der Gruppe A₁ wird durch Verschieben eines Druckmittelvolumens V_{A} mittels der Druckbereitstellungseinrichtung 5 durchgeführt. Aufgrund der oben beschriebenen Wahl der Ansteuerströme werden dabei die Einlassventile 6a, 6d überströmt und die Einlassventile 6b, 6c der übrigen Radbremsen 10, 11 bleiben geschlossen, d.h. die Ventile geben nicht dem Bremssystemdruck nach und öffnen nicht. Das Überströmen erfolgt mittels Volumen- bzw. Positionssteuerung der Druckbereitstellungseinrichtung 5 anhand der vorgegebenen Druck-Volumen-Zusammenhänge Fⁿ der Radbremsen n=8, 9, 10, 11. Beispielsgemäß werden unter Berücksichtigung der Druck-Volumen-Zusammenhänge F⁸ und F¹¹ der Radbremsen 8, 11 die dem Solldruck p¹¹_{Soll} zugeordneten Radaufnahmevolumen V⁸ und V¹¹ bestimmt. Das entsprechende Volumen V_{A} = V⁸ + V¹¹ wird dann über die Einlassventile 6a, 6d in die Radbremsen 8, 11 hineindrückt. Dieser Vorgang wird solange durchgeführt, bis das für die Radbremsen der vorbestimmten Gruppe A₁ zusammen erforderliche Druckmittelvolumen von der Druckbereitstellungseinrichtung 5 zur Verfügung gestellt wurde. Nach erfolgtem Verschieben des Druckmittelvolumens V_{A} wird zum Zeitpunkt t₁₂ das Einlassventil 6d der Radbremse fest geschlossen, d.h. der Ansteuerstrom I¹¹ auf den Wert I_{c} erhöht. In Radbremse 11 ist dann der gewünschte Solldruck p¹¹ₛₒₗₗ erreicht.

Eine Fortsetzung des Druckaufbaus erfolgt dann an den Radbremsen der nächsten vorbestimmten Gruppe A₂, beispielsgemäß an Radbremse 8. Der Ansteuerstrom des Einlassventils 6a bleibt daher beispielsgemäß auf dem Wert I⁸₁₁, so dass der Bremsdruckaufbau in der Radbremse 8 durch Überströmen des Einlassventils 6a durch Verschieben eines entsprechenden, z.B. anhand des Druck-Volumen-Zusammenhangs F⁸ und des Solldrucks p⁸ₛₒₗₗ bestimmten, Druckmittelvolumens V_{A} mittels der Druckbereitstellungseinrichtung fortgesetzt wird. Zum Zeitpunkt t₁₃ wurde das Druckmittelvolumen V_{A} verschoben und auch das Einlassventil 6a wird fest verschlossen (Ansteuerstromwert I_{c}). Der gewünschte Solldruck p⁸ₛₒₗₗ ist in Radbremse 8 erreicht.

Entsprechende Verfahren mit z.B. einem simultanen Druckaufbau an zunächst drei Radbremsen, dann einem simultanen Druckaufbau an zwei Radbremsen und dann einem Druckaufbau an einer Radbremse werden analog durchgeführt. Allgemein umfasst eine vorbestimmte Gruppe ein oder mehreren Radbremsen.

Es ist auch denkbar, dass zunächst ein simultaner Druckaufbau an z.B. drei Radbremsen durchgeführt wird, und der nachfolgende weitere Druckaufbau an zwei Radbremsen sequentiell (und nicht simultan) durchgeführt wird. Eine Mischung der beispielsgemäßen Verfahren von Fig. 2 und 4 ist also im Sinne der Erfindung.

Für einen, vom Druckaufbau an den Radbremsen 8, 11 unabhängigen, Druckabbau an den Radbremsen 9 und 10 werden die stromlos geschlossenen Auslassventile 6b, 6c bestromt, d.h. Erhöhung des Ansteuerstroms J⁹, J¹⁰ ab Zeitpunkt t₁₁, so dass die Auslassventile 6b, 6c öffnen und Druckmittelvolumen in einen Druckmittelvorratsbehälter 4 abfließen kann. Es findet also beispielsgemäß an den Radbremsen 8 und 11 eine Druckaufbaudosierung mittels Multiplex-Aktuator-Wegsteuerung und an den Radbremsen 9 und 10 eine Druckabbaudosierung mittels Auslassventil-Drucksteuerung statt.

Ein Vorteil des beispielgemäßen Verfahrens ist es, dass der parallele Druckaufbau frei von Crossflow-Effekten (direkte Strömung von einem Radbremskreis zu einem Anderen) ist, da der Druck der Druckbereitstellungseinrichtung immer höher ist. Der beispielsgemäße parallele Druckaufbau ist damit genauer als simultane Druckeinstellungen mit Multiplexventilen.

Ein erfindungsgemäßes Verfahren kann ebenso mit einer Zwei- oder Mehr-Kolben-Rückförderpumpe, wie sie an sich aus bekannten ESC-Bremsanlagen bekannt ist, durchgeführt werden. Die Pumpe ist hierzu mit einem sog. Pumpenpositionssensor ausgestattet. Die Ansteuerung des Ansteuermotors der Pumpe ist derart ausgebildet, dass eine gute Positionierbarkeit des Pumpenexzenters möglich ist.

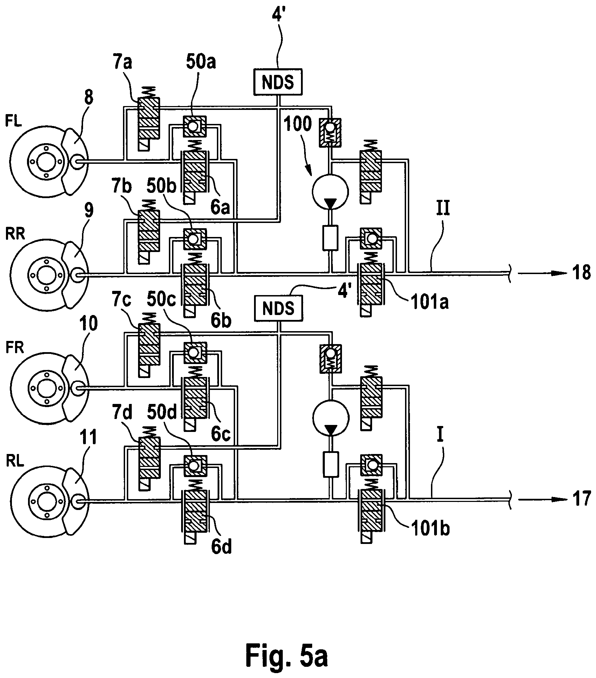

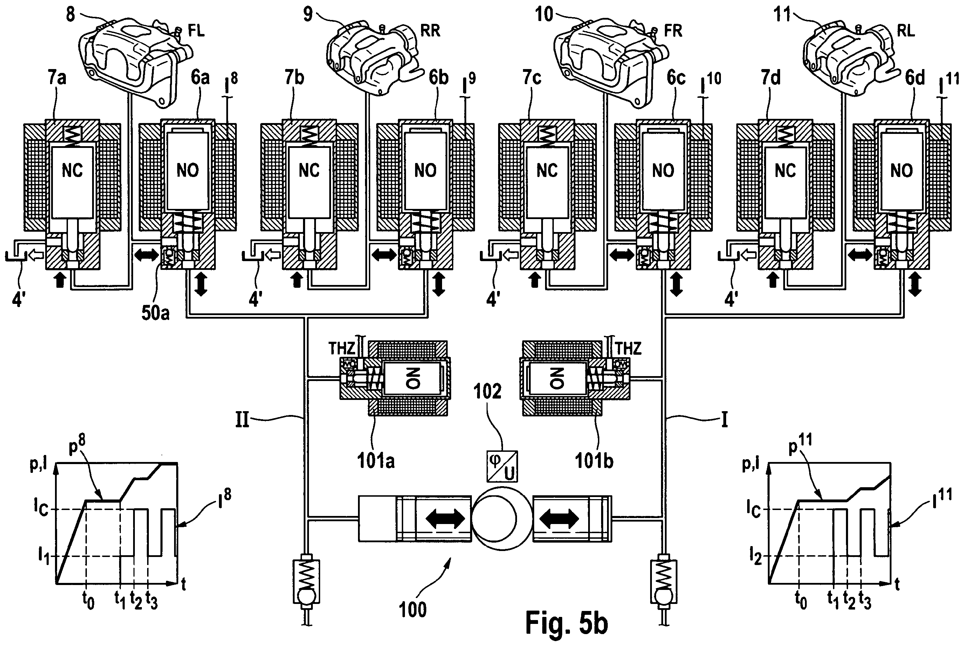

In Fig. 5 ist ein Ausschnitt einer an sich bekannten ESC-Bremsanlage dargestellt. Diese Bremsanlage ist ebenso zur Durchführung eines erfindungsgemäßen Verfahrens geeignet. Der Ausschnitt zeigt u.a. die Radbremsen 8, 9, 10, 11, die Einlassventile 6a-6d mit Rückschlagventilen 50a-50d, die Auslassventile 7a-7d, ein, z.B. stromlos offenes, Trennventil 101a, 101b je Bremskreis I, II, welches in der hydraulischen Verbindungsleitung von einem Druckraum 17, 18 des nicht dargestellten Hauptbremszylinders 2 (THZ) zu den Einlassventilen angeordnet ist, und eine Zwei-Kolben-Rückförderpumpe 100 mit einem Pumpenpositionssensor 102. Die Auslassventile 7a-7d sind ausgangssseitig mit einem Niederdruckspeicher 4' je Bremskreis I, II verbunden.
In Fig. 5b sind unterhalb der Radbremsen 8 und 11 die Diagramme mit dem jeweiligen zeitlichen Verlauf der Ansteuergröße I⁸ und I¹¹ der Einlassventile 6a und 6d, sowie der Radbremsdrücke p⁸ und p¹¹ der Radbremsen 8 und 11 dargestellt. Die Diagramme für die Radbremsen 9 und 10 wurden der besseren Übersichtlichkeit wegen weggelassen. Der Bremsdruckverlauf sowie das Verfahren zum Druckaufbau an den Radbremsen 8 und 11 entspricht dem anhand von Fig. 2 beschriebenen Verfahren. Entsprechend entspricht die Bestromung der Einlassventile 6a, 6d (wie auch die nicht dargestellte Bestromung der Einlassventile 6b, 6c) der Bestromung des in Fig. 2 dargestellten Beispiels.

Da die beiden Bremskreise I und II kinematisch hydraulisch zwangsgekoppelt sind, ist bei einem Druckaufbau in einem der Bremskreise ein unerwünschter Druckaufbau in dem "anderen" Bremskreis dadurch zu vermeiden, dass das Trennventil 101 dieses Kreises mit einem geringen Schließstrom beaufschlagt wird, während die Einlassventile voll bestromt geschlossen gehalten werden.

Bei bekannten Bremsanlagen, bei welchen die Druckmodulation mittels einer hochdynamischen Druckbereitstellungseinrichtung mit einem Aktuator und radindividueller Multiplexventile durchgeführt wird, erfolgt die radindividuelle Druckeinstellung an den einzelnen Radbremsen sequenziell in der Weise, dass das der einzelnen Radbremse zugeordnete Multiplexventil voll geöffnet wird. Damit wird Druckgleichheit zwischen der Radbremse und der Druckbereitstellungeinrichtung hergestellt und die Druckeinstellung erfolgt mittels Aktuatorverstellung (Vor- oder Rückhub). Hierbei wird entweder direkt der der Druckbereitstellungseinrichtung zugeordnete Drucksensor für die Druckeinstellung verwendet oder, z.B. bei sehr schnellen Vorgängen, die aus der Volumenaufnahme-Kennlinie rückgerechnete Volumenänderung (Positionsregelkreis des Aktuators). Dieses Multiplex-Verfahren besitzt den Nachteil, dass bei einer komfortorientierten (d.h. langsamen) radindividuellen Vier-Radregelung prinzipbedingte signifikante Geräusch-Probleme, sog. NVH-Probleme (NHV: Noise Vibration Harshness), auftreten. Die Ursachen für die Geräuschentstehung sind im Wesentlichen darin begründet, dass der Aktuator vier unterschiedliche Drücke in sehr hoher Frequenz einzeln (nacheinander) einstellen muss, da sich sonst eine zu hohe Stufigkeit des Druckverlaufs nachteilig auf das Bremsverhalten auswirken würde. Diese hohe Frequenz erfordert sehr schnelle Reversier-Vorgänge des Aktuators, die zum einen zunächst vom Aktuator erst einmal leistbar sein müssen (hohe Kosten für den Aktuator) und zum andere zu der damit verbundenen Geräuschentstehung führen. Weiterhin müssen die Multiplexventile in schneller Folge in höchster Geschwindigkeit (vollständig) geöffnet und (vollständig) geschlossen werden. Dies ist notwendig, da erst die schnelle Betätigung der Ventile die hohe Multiplexfrequenz ermöglicht. Dies führt zu entsprechend lauten Anschlaggeräuschen innerhalb der Ventile, die sich über das Gesamtaggregat an die Fahrzeugspritzwand ausbreiten. Ebenso werden die Druckmittelsäulen in den Bremsleitungen extrem schnell beschleunigt und wieder abgebremst. Durch die Induktivität des Druckmittels entstehen die bekannten Geräuscheffekte.

Durch die Erfindung wird eine fein dosierte Regelung der Bremsdrücke der Radbremsen bei gleichzeitig möglichst geringer Geräuschentwicklung ermöglicht. Ein Vorteil des erfindungsgemäßen Verfahrens ist es, dass der Aktuator der Druckbereitstellungseinrichtung bei einem radindividuellen Druckaufbau nicht reversieren muss und damit bereits die hiermit verbundene Geräuschentstehung unterbunden ist. Ebenso entfallen die häufigen Ein- und Ausschaltvorgänge (Schließ- und Öffnungsvorgänge) der Einlassventile. Die Einlassventile sind während der Druckeinstellungen kontinuierlich geschlossen und werden nur überströmt, womit die Anschlaggeräusche stark reduziert sind (kein Anschlagen am hinteren Anschlag, langsames und kraftarmes (geringer Stromüberschuss) Schließen bei Beendigung des Druckaufbaus). Wegen der deutlich geringeren Frequenz ist auch der maximal erwartete Druckgradient deutlich geringer, was die Geräuscheffekte durch die Induktivität des Druckmittels ("Druckschläge") deutlich verringert.
Ein weiterer Vorteil des erfindungsgemäßen Verfahrens ist es, dass Druckabbaubedarfe völlig unabhängig zeitgleich über die Auslassventile 7a-7d erfolgen können (siehe z.B. Fig. 3 und 4).

## Patentansprüche

1. Verfahren zum Betreiben einer Bremsanlage für Kraftfahrzeuge mit
• mehreren Radbremsen (8, 9, 10, 11), für welche radindividuelle Solldrücke (pⁿₛₒₗₗ) vorgegeben werden,
• einer elektrisch steuerbaren Druckbereitstellungseinrichtung (5, 100), die ein Druckmittelvolumen (V) zur Betätigung der Radbremsen abgeben kann, wobei das von der Druckbereitstellungseinrichtung abgegebene Druckmittelvolumen bestimmbar ist (44, 102), und
• je Radbremse einem zwischen Druckbereitstellungseinrichtung und Radbremse angeordneten, analogisierten oder analog angesteuerten Einlassventil (6a-6d), welches mittels einer elektrischen Ansteuergröße (Iⁿ) angesteuert wird, und einem elektrisch ansteuerbaren Auslassventil (7a-7d), zum Einstellen radindividueller Bremsdrücke (pⁿ), wobei den Einlassventilen jeweils ein in Richtung der Druckbereitstellungseinrichtung öffnendes Rückschlagventil (50a-50d) parallel geschaltet ist,
**dadurch gekennzeichnet, dass** für jede Radbremse ein Druck-Volumen-Zusammenhang (Fⁿ) vorgegeben wird, dass zu Beginn einer radindividuellen Bremsdruckregelung alle Einlassventile (6a-6d) geschlossen werden und dass ein Druckaufbau in einer vorbestimmten Gruppe (A₁, A₂) von ein oder mehreren Radbremsen (8; 11; 8, 11) durch Verschieben eines Druckmittelvolumens (V_{A}) in die vorbestimmte Gruppe (A₁, A₂) von Radbremsen mittels der Druckbereitstellungseinrichtung (5, 100) durchgeführt wird, wobei jedes Einlassventil der ein oder mehreren Radbremsen (8; 11; 8, 11) der vorbestimmten Gruppe (A₁, A₂) derart angesteuert wird, dass das Einlassventil überströmt wird, und wobei jedes Einlassventil der übrigen Radbremsen (9, 10, 11; 8, 9, 10; 9, 10) derart angesteuert wird, dass das Einlassventil geschlossen bleibt.

2. Verfahren nach Anspruch 1, **dadurch gekennzeichnet, dass** das von der Druckbereitstellungseinrichtung zu verschiebende Druckmittelvolumen (V_{A}) anhand des oder der Druck-Volumen-Zusammenhänge (Fⁿ) und des oder der Solldrücke (Pⁿₛₒₗₗ) der ein oder mehreren Radbremsen der vorbestimmten Gruppe (A₁, A₂) bestimmt wird.

3. Verfahren nach Anspruch 1 oder 2, **dadurch gekennzeichnet, dass** das Verschieben des Druckmittelvolumens (V_{A}) durch eine Volumensteuerung oder Wegsteuerung der Druckbereitstellungseinrichtung, insbesondere unter Berücksichtigung des oder der Druck-Volumen-Zusammenhänge (Fⁿ) und des oder der Solldrücke (pⁿₛₒₗₗ) der ein oder mehreren Radbremsen der vorbestimmten Gruppe (A₁, A₂), erfolgt.

4. Verfahren nach einem der Ansprüche 1 bis 3, **dadurch gekennzeichnet, dass** in verschiedenen Gruppen von ein oder mehreren Radbremsen ein Druckaufbau sequenziell (t₁, t₂, t₃) durchgeführt wird, wobei in aufeinanderfolgen Zeitintervallen verschiedene Gruppen von ein oder mehreren Radbremsen der vorbestimmten Gruppe angehören und ein Druckaufbau durch Überströmen der Einlassventile der Radbremsen der jeweils vorbestimmten Gruppe durchgeführt wird.

5. Verfahren nach einem der Ansprüche 1 bis 4, **dadurch gekennzeichnet, dass** für jedes Einlassventil eine Ansteuercharakteristik, insbesondere eine Öffnungskennlinie oder eine Schließkennlinie, welche eine Abhängigkeit der elektrischen Ansteuergröße (Iⁿ) von einem an dem Einlassventil anliegenden Differenzdruck (Δp) oder Druck (p) beschreibt, vorgegeben ist.

6. Verfahren nach einem der Ansprüche 1 bis 5, **dadurch gekennzeichnet, dass**, wenn der Druck an den ein oder mehreren Radbremsen der vorbestimmten Gruppe (A₁, A₂) auf einen vorgegebene Enddruck (p⁸₁, p¹¹₁, p⁸₂; P¹¹_{Soll}, p⁸ₛₒₗₗ) aufgebaut werden soll, die ein oder mehreren Einlassventile dieser Radbremsen jeweils mit einer Ansteuergröße angesteuert werden, deren Wert mindestens einen Schwellenwert (I_{grenz}) besitzt, der dem Differenzdruck zwischen dem vorgegebenen Enddruck und dem geringsten Druck der übrigen Radbremsen entspricht.

7. Verfahren nach Anspruch 6, **dadurch gekennzeichnet, dass** für jedes Einlassventil ein dem Differenzdruck entsprechender Schwellenwert aus einer vorgegebenen Ansteuercharakteristik, insbesondere einer Schließkennlinie, des Einlassventils bestimmt wird.

8. Verfahren nach Anspruch 6 oder 7, **dadurch gekennzeichnet, dass** die Ansteuergröße den jeweiligen Schwellenwert (I_{grenz}) um nicht mehr als einen vorgegebenen Betrag (ΔI) übersteigt.

9. Verfahren nach einem der Ansprüche 1 bis 8, **dadurch gekennzeichnet, dass**, um in einer Gruppe von zwei oder mehr vorgegebenen Radbremsen (8, 11) einen Druckaufbau auf unterschiedliche, radindividuelle Solldrücke (p⁸_{Soll,} p¹¹_{Soll}) durchzuführen, zunächst alle vorgegebenen Radbremsen der vorbestimmten Gruppe (A₁) zugewiesen werden und ein gleichzeitiger Druckaufbau auf den niedrigsten Solldruck (p¹¹_{Soll}) der Solldrücke der vorgegebenen Radbremsen (8, 11) durch Überströmen der Einlassventile der Radbremsen der vorbestimmten Gruppe (A₁) durchgeführt wird.

10. Verfahren nach Anspruch 9, **dadurch gekennzeichnet, dass**, nachdem ein vorbestimmtes Druckmittelvolumen (V_{A}) in die vorbestimmte Gruppe (A₁) verschoben wurde, jedes Einlassventil (6d) der Radbremsen (11) der vorbestimmten Gruppe, deren Solldruck dem niedrigsten Solldruck (p¹¹_{Soll}) entspricht, derart angesteuert wird, dass das Einlassventil (6d) nicht mehr überströmt wird.

11. Verfahren nach Anspruch 10, **dadurch gekennzeichnet, dass** diejenigen vorgegebenen Radbremsen (8) mit einem Solldruck (p⁸ₛₒₗₗ), der höher als der niedrigste Solldruck (p¹¹_{Soll}) ist, der vorbestimmten Gruppe (A₂) zugewiesen werden, und dass in dieser vorbestimmten Gruppe (A₂) ein Druckaufbau auf den nächst höheren Solldruck durch Überströmen der Einlassventile (6a) der Radbremsen (8) durchgeführt wird.

12. Verfahren nach einem der Ansprüche 1 bis 11, **dadurch gekennzeichnet, dass** der von der Druckbereitstellungseinrichtung (5, 100) bereitgestellte Bremssystemdruck (P) bestimmt wird (19) und zur Überwachung, insbesondere des Druckaufbaus, herangezogen wird.

13. Verfahren nach einem der Ansprüche 1 bis 12, **dadurch gekennzeichnet, dass** der von der Druckbereitstellungseinrichtung (5, 100) bereitgestellte Bremssystemdruck (P) jederzeit größer als der größte Druck in einer der Radbremsen ist.

14. Bremsanlage für Kraftfahrzeuge mit
• mehreren Radbremsen (8, 9, 10, 11),
• einer elektrisch steuerbaren Druckbereitstellungseinrichtung (5, 100), die ein Druckmittelvolumen (V) zur Betätigung der Radbremsen (8-11) abgeben kann, wobei das von der Druckbereitstellungseinrichtung abgegebene Druckmittelvolumen (V) bestimmbar ist (44, 102),
• einem mittels eines Bremspedals (1) betätigbaren Hauptbremszylinder (2), welcher insbesondere mit den Radbremsen trennbar (23a, 23b) verbunden ist,
• je Radbremse einem zwischen Druckbereitstellungseinrichtung und Radbremse angeordneten, analogisierten oder analog angesteuerten Einlassventil (6a-6d), welches mittels einer elektrischen Ansteuergröße (Iⁿ) angesteuert wird, und einem elektrisch ansteuerbaren Auslassventil (7a-7d), wobei den Einlassventilen jeweils ein in Richtung der Druckbereitstellungseinrichtung öffnendes Rückschlagventil (50a-50d) parallel geschaltet ist, und
• einer elektronischen Steuer- und Regeleinheit (12) zur Ansteuerung der Druckbereitstellungseinrichtung sowie der Einlass- und Auslassventile,
**dadurch gekennzeichnet, dass** in der elektronischen Steuer- und Regeleinheit (12) für jede Radbremse ein Druck-Volumen-Zusammenhang (Fⁿ) vorgegeben wird, mittels der elektronischen Steuer- und Regeleinheit zu Beginn einer radindividuellen Bremsdruckregelung alle Einlassventile (6a-6d) geschlossen werden und ein Druckaufbau in einer vorbestimmten Gruppe (A₁, A₂) von ein oder mehreren Radbremsen (8; 11; 8, 11) durch Verschieben eines Druckmittelvolumens (V_{A}) in die vorbestimmte Gruppe (A₁, A₂) von Radbremsen mittels der Druckbereitstellungseinrichtung (5, 100) durchgeführt wird, wobei jedes Einlassventil der ein oder mehreren Radbremsen (8; 11; 8, 11) der vorbestimmten Gruppe (A₁, A₂) derart angesteuert wird, dass das Einlassventil überströmt wird, und wobei jedes Einlassventil der übrigen Radbremsen (9, 10, 11; 8, 9, 10; 9, 10) derart angesteuert wird, dass das Einlassventil geschlossen bleibt.

15. Bremsanlage nach Anspruch 14, **dadurch gekennzeichnet, dass** in der elektronischen Steuer- und Regeleinheit (12) ein Verfahren gemäß einem der Ansprüche 2 bis 13 durchgeführt wird.

## Claims

1. Method for operating a brake system for motor vehicles comprising:
• a plurality of wheel brakes (8, 9, 10, 11) for which wheel-individual reference pressures (pⁿₛₒₗₗ) are predetermined,
• an electrically controllable pressure supply device (5, 100) which can deliver a pressure medium volume (V) for actuating the wheel brakes, the pressure medium volume delivered by the pressure supply device being determinable (44, 102), and
• for each wheel brake an analogized or analog-controlled inlet valve (6a-6d) arranged between the pressure supply device and the wheel brake, which inlet valve (6a-6d) is activated by means of an electrical activation quantity (Iⁿ) and an electrically activatable outlet valve (7a-7d), for setting wheel-individual brake pressures (pⁿ), a respective non-return valve (50a-50d) which opens in the direction of the pressure supply device being connected in parallel with the inlet valves,
**characterized in that** for each wheel brake a pressure-volume relationship (Fⁿ) is predetermined, **in that** at the start of a wheel-individual brake pressure control process all the inlet valves (6a-6d) are closed and **in that** a pressure build-up is carried out in a predefined group (A₁, A₂) of one or more wheel brakes (8; 11; 8, 11) by displacing a pressure medium volume (V_{A}) into the predefined group (A₁, A₂) of wheel brakes by means of the pressure supply device (5, 100), each inlet valve of the one or more wheel brakes (8; 11; 8, 11) of the predefined group (A₁, A₂) being activated in such a way that the inlet valve is overflowed, and each inlet valve of the remaining wheel brakes (9, 10, 11; 8, 9, 10; 9, 10) being activated in such a way that the inlet valve remains closed.

2. Method according to Claim 1, **characterized in that** the pressure medium volume (V_{A}) to be displaced by the pressure supply device is determined with reference to the pressure-volume relationship or relationships (Fⁿ) and to the reference pressure or pressures (Pⁿₛₒₗₗ) of the one or more wheel brakes of the predefined group (A₁, A₂) .

3. Method according to Claim 1 or 2, **characterized in that** the displacement of the pressure medium volume (V_{A}) is effected by a volume control or travel control of the pressure supply device, in particular while taking account of the pressure-volume relationship or relationships (Fⁿ) and of the reference pressure or pressures (pⁿₛₒₗₗ) of the one or more wheel brakes of the predefined group (A₁, A₂).

4. Method according to any one of Claims 1 to 3, **characterized in that** a pressure build-up is carried out sequentially (t₁, t₂, t₃) in different groups of one or more wheel brakes, different groups of one or more wheel brakes belonging to the predefined group in successive time intervals and a pressure build-up being carried out by overflowing the inlet valves of the wheel brakes of the respective predefined group.

5. Method according to any one of Claims 1 to 4, **characterized in that** for each inlet valve an activation characteristic, in particular an opening characteristic curve and the closing characteristic curve describing a dependence of the electrical activation quantity (Iⁿ) on a differential pressure (Δp) or pressure (p) acting on the inlet valve, is predetermined.

6. Method according to any one of Claims 1 to 5, **characterized in that,** if the pressure at the one or more wheel brakes of the predefined group (A₁, A₂) is to be built up to a predetermined final pressure (p⁸₁, p¹¹₁, p⁸₂; p¹¹ₛₒₗₗ, p⁸ₛₒₗₗ), the one or more inlet valves of these wheel brakes is/are each activated with an activation quantity the value of which has at least a threshold value (I_{grenz}) which corresponds to the differential pressure between the predetermined final pressure and the lowest pressure of the remaining wheel brakes.

7. Method according to Claim 6, **characterized in that** for each inlet valve a threshold value corresponding to the differential pressure is determined from a predefined activation characteristic, in particular from a closing characteristic curve, of the inlet valve.

8. Method according to Claim 6 or 7, **characterized in that** the activation quantity exceeds the respective threshold value (I_{grenz}) by not more than a predetermined amount (ΔI).

9. Method according to any one of Claims 1 to 8, **characterized in that,** in order to carry out a pressure build-up to different, wheel-individual reference pressures (p⁸ₛₒₗₗ, p¹¹ₛₒₗₗ) in a group of two or more predetermined wheel brakes (8, 11), all the predetermined wheel brakes are first allocated to the predefined group (A₁) and a simultaneous pressure build-up to the lowest reference pressure (p¹¹ₛₒₗₗ) of the reference pressures of the predetermined wheel brakes (8, 11) is carried out by overflowing the inlet valves of the wheel brakes of the predefined group (A₁).

10. Method according to Claim 9, **characterized in that** after a predefined pressure medium volume (V_{A}) has been displaced into the predefined group (A₁), each inlet valve (6d) of the wheel brakes (11) of the predefined group the reference pressure of which corresponds to the lowest reference pressure (p¹¹ₛₒₗₗ) is activated in such a way that the inlet valve (6d) is no longer overflowed.

11. Method according to Claim 10, **characterized in that** the predetermined wheel brakes (8) having a reference pressure (p⁸ₛₒₗₗ) which is higher than the lowest reference pressure (p¹¹ₛₒₗₗ) are allocated to the predefined group (A₂), and **in that** in this predefined group (A₂) a pressure build-up to the next-higher reference pressure is carried out by overflowing the inlet valves (6a) of the wheel brakes (8).

12. Method according to any one of Claims 1 to 11, **characterized in that** the brake system pressure (P) made available by the pressure supply device (5, 100) is determined (19) and is used for monitoring, in particular, the pressure build-up.

13. Method according to any one of Claims 1 to 12, **characterized in that** the brake system pressure (P) made available by the pressure supply device (5, 100) is at all times higher than the highest pressure in any one of the wheel brakes.

14. Brake system for motor vehicles, comprising:
• a plurality of wheel brakes (8, 9, 10, 11),
• an electrically controllable pressure supply device (5, 100) which can deliver a pressure medium volume (V) for actuating the wheel brakes (8-11), the pressure medium volume (V) delivered by the pressure supply device being determinable (44, 102),
• a brake master cylinder (2) which is actuable by means of a brake pedal (1) and which, in particular, is connected disconnectably (23a, 23b) to the wheel brakes,
• for each wheel brake an analogized or analog-controlled inlet valve (6a-6d) arranged between the pressure supply device and the wheel brake, which inlet valve (6a-6d) is activated by means of an electrical activation quantity (Iⁿ) and an electrically activatable outlet valve (7a-7d), a respective non-return valve (50a-50d) which opens in the direction of the pressure supply device being connected in parallel with the inlet valves, and
• an electronic control and regulation unit (12) for activating the pressure supply device and the inlet and outlet valves,
**characterized in that** in the electronic control and regulation unit (12) for each wheel brake a pressure-volume relationship (Fⁿ) is predetermined, by means of the electronic control and regulation unit at the start of a wheel-individual brake pressure control process all the inlet values (6a-6d) are closed, and a pressure build-up is carried out in a predefined group (A₁, A₂) of one or more wheel brakes (8; 11; 8, 11) by displacing a pressure medium volume (V_{A}) into the predefined group (A₁, A₂) of wheel brakes by means of the pressure supply device (5, 100), each inlet valve of the one or more wheel brakes (8; 11; 8, 11) of the predefined group (A₁, A₂) being activated in such a way that the inlet valve is overflowed, and each inlet valve of the remaining wheel brakes (9, 10, 11; 8, 9, 10; 9, 10) being activated in such a way that the inlet valve remains closed.

15. Brake system according to Claim 14, **characterized in that** a method according to any one of Claims 2 to 13 is carried out in the electronic control and regulation unit (12).

## Revendications

1. Procédé pour faire fonctionner un système de freinage pour véhicules automobiles, comprenant
* plusieurs freins de roue (8, 9, 10, 11), pour lesquels sont prédéfinies des pressions de consigne (pⁿₛₒₗₗ) individuelles aux roues,
* un dispositif de fourniture de pression (5, 100) à commande électrique qui peut délivrer un volume de fluide sous pression (V) en vue d'actionner les freins de roue, le volume de fluide sous pression délivré par le dispositif de fourniture de pression pouvant être déterminé (44, 102), et
* pour chaque frein de roue, une vanne d'entrée (6a-6d) disposée entre le dispositif de fourniture de pression et le frein de roue, à excitation rendue analogique ou similaire, laquelle peut être entraînée à l'aide d'une grandeur d'excitation électrique (Iⁿ), et une vanne de sortie (7a-7d) pouvant être excitée électriquement et destinée à régler des pressions de freinage (pⁿ) individuelles aux roues, un clapet anti-retour (50a-50d) qui s'ouvre en direction du dispositif de fourniture de pression étant respectivement branché en parallèle avec les vannes d'entrée,
**caractérisé en ce qu'**une relation pression-volume (Fⁿ) est prédéfinie pour chaque frein de roue, **en ce qu'**au début d'une régulation de la pression de freinage individuelle à une roue toutes les vannes d'entrée (6a-6d) sont fermées et **en ce qu'**une mise en pression dans un groupe prédéterminé (A₁, A₂) d'un ou plusieurs freins de roue (8 ; 11 ; 8, 11) est effectuée en déplaçant un volume de fluide sous pression (V_{A}) dans le groupe prédéterminé (A₁, A₂) de freins de roue au moyen du dispositif de fourniture de pression (5, 100), chaque vanne d'entrée du ou des plusieurs freins de roue (8 ; 11 ; 8, 11) du groupe prédéterminé (A₁, A₂) étant excitée de telle sorte qu'une décharge se produit à travers la vanne d'entrée et chaque vanne d'entrée des freins de roue restants (9, 10, 11 ; 8, 9, 10 ; 9, 10) étant excitée de telle sorte que la vanne d'entrée reste fermée.

2. Procédé selon la revendication 1, **caractérisé en ce que** le volume de fluide sous pression (V_{A}) à déplacer par le dispositif de fourniture de pression est déterminé au moyen de la ou des relations pression-volume (Fⁿ) et de la ou des pressions de consigne (pⁿₛₒₗₗ) du ou des plusieurs freins de roue du groupe prédéterminé (A₁, A₂) .

3. Procédé selon la revendication 1 ou 2, **caractérisé en ce que** le déplacement du volume de fluide sous pression (V_{A}) est effectué par une commande de volume ou une commande de course du dispositif de fourniture de pression, notamment en tenant compte de la ou des relations pression-volume (Fⁿ) et de la ou des pressions de consigne (pⁿₛₒₗₗ) du ou des plusieurs freins de roue du groupe prédéterminé (A₁, A₂).

4. Procédé selon l'une des revendications 1 à 3, **caractérisé en ce que** dans différents groupes d'un ou plusieurs freins de roue, une mise en pression est effectuée séquentiellement (t₁, t₂, t₃), différents groupes d'un ou plusieurs freins de roue faisant partie du groupe prédéterminé dans des intervalles de temps successifs et une mise en pression étant réalisée par une décharge à travers les vannes d'entrée des freins de roue du groupe prédéterminé respectif.

5. Procédé selon l'une des revendications 1 à 4, **caractérisé en ce qu'**une caractéristique d'excitation est prédéfinie pour chaque vanne d'entrée, notamment une courbe caractéristique d'ouverture ou une courbe caractéristique de fermeture, qui décrit une dépendance de la grandeur d'excitation électrique (Iⁿ) d'une pression différentielle (Δp) ou d'une pression (p) appliquée à la vanne d'entrée.

6. Procédé selon l'une des revendications 1 à 5, **caractérisé en ce que** lorsque la pression au niveau du ou des plusieurs freins de roue du groupe prédéterminé (A₁, A₂) doit être établie à une pression finale prédéfinie (p⁸₁, p¹¹₁, p⁸₂ ; p¹¹ₛₒₗₗ, p⁸ₛₒₗₗ), la ou les plusieurs vannes d'entrée de ces freins de roue sont respectivement excitées avec une grandeur d'excitation dont la valeur possède au moins une valeur de seuil (I_{grenz}) qui correspond à la pression différentielle entre la pression finale prédéfinie et la pression la plus faible des autres freins de roue.

7. Procédé selon la revendication 6, **caractérisé en ce que** pour chaque vanne d'entrée, une valeur de seuil correspondant à la pression différentielle est déterminée à partir d'une caractéristique d'excitation prédéterminée, notamment d'une courbe caractéristique de fermeture, de la vanne d'entrée.

8. Procédé selon la revendication 6 ou 7, **caractérisé en ce que** la grandeur d'excitation dépasse la valeur de seuil (I_{grenz}) correspondante au maximum d'une valeur prédéfinie (ΔI).

9. Procédé selon l'une des revendications 1 à 8, **caractérisé en ce que** pour effectuer une mise en pression à des pressions de consigne (p⁸ₛₒₗₗ, p¹¹ₛₒₗₗ) différentes, individuelles aux roues, dans un groupe de deux freins de roue (8, 11) prédéfinis ou plus, tous les freins de roue prédéfinis sont initialement affectés au groupe prédéterminé (A₁) et une mise en pression simultanée à la pression de consigne la plus basse (p¹¹ₛₒₗₗ) des pressions de consigne des freins de roue (8, 11) prédéfinis est effectuée par décharge à travers les vannes d'entrée des freins de roue du groupe prédéterminé (A₁) .

10. Procédé selon la revendication 9, **caractérisé en ce qu'**après un volume de fluide sous pression (V_{A}) prédéterminé a été déplacé dans le groupe prédéterminé (A₁), chaque vanne d'entrée (6d) des freins de roue (11) du groupe prédéterminé dont la pression de consigne correspond à la pression de consigne la plus basse (p¹¹ₛₒₗₗ) est excitée de telle sorte qu'aucune décharge ne se produit plus à travers la vanne d'entrée (6d).

11. Procédé selon la revendication 10, **caractérisé en ce que** les freins de roue (8) prédéfinis ayant une pression de consigne (p⁸ₛₒₗₗ) qui est supérieure à la pression de consigne la plus basse (p¹¹ₛₒₗₗ) sont affectés au groupe prédéterminé (A₂), et **en ce que** dans ce groupe prédéterminé (A₂) est effectuée une mise en pression à la pression de consigne immédiatement supérieure par décharge à travers les vannes d'entrée (6a) des freins de roue (8).

12. Procédé selon l'une des revendications 1 à 11, **caractérisé en ce que** la pression de système de freinage (P) fournie par le dispositif de fourniture de pression (5, 100) est déterminée (19) et utilisée pour la surveillance, notamment de la mise en pression.

13. Procédé selon l'une des revendications 1 à 12, **caractérisé en ce que** la pression de système de freinage (P) fournie par le dispositif de fourniture de pression (5, 100) est à tout moment supérieure à la pression la plus élevée dans l'un des freins de roue.

14. Système de freinage pour véhicules automobiles, comprenant :
* plusieurs freins de roue (8, 9, 10, 11),
* un dispositif de fourniture de pression (5, 100) à commande électrique qui peut délivrer un volume de fluide sous pression (V) en vue d'actionner les freins de roue (8-11), le volume de fluide sous pression (V) délivré par le dispositif de fourniture de pression pouvant être déterminé (44, 102),
* un maître-cylindre de frein (2) pouvant être actionné au moyen d'une pédale de frein (1), lequel est notamment relié aux freins de roue avec possibilité de séparation (23a, 23b),
* pour chaque frein de roue, une vanne d'entrée (6a-6d) disposée entre le dispositif de fourniture de pression et le frein de roue, à excitation rendue analogique ou similaire, laquelle est excitée au moyen d'une grandeur d'excitation électrique (Iⁿ), et une vanne de sortie (7a-7d) pouvant être excitée électriquement, un clapet anti-retour (50a-50d) qui s'ouvre en direction du dispositif de fourniture de pression étant respectivement branché en parallèle avec les vannes d'entrée, et
* une unité de commande et de régulation électronique (12) destinée à commander le dispositif de fourniture de pression et à exciter les vannes d'entrée et de sortie,
**caractérisé en ce qu'**une relation pression-volume (Fⁿ) est prédéfinie pour chaque frein de roue dans l'unité de commande et de régulation électronique (12), au début d'une régulation de la pression de freinage individuelle à une roue, toutes les vannes d'entrée (6a-6d) sont fermées au moyen de l'unité de commande et de régulation électronique et une mise en pression dans un groupe prédéterminé (A₁, A₂) d'un ou plusieurs freins de roue (8 ; 11 ; 8, 11) est effectuée en déplaçant un volume de fluide sous pression (V_{A}) dans le groupe prédéterminé (A₁, A₂) de freins de roue au moyen du dispositif de fourniture de pression (5, 100), chaque vanne d'entrée du ou des plusieurs freins de roue (8 ; 11 ; 8, 11) du groupe prédéterminé (A₁, A₂) étant excitée de telle sorte qu'une décharge se produit à travers la vanne d'entrée et chaque vanne d'entrée des freins de roue restants (9, 10, 11 ; 8, 9, 10 ; 9, 10) étant excitée de telle sorte que la vanne d'entrée reste fermée.

15. Système de freinage selon la revendication 14, **caractérisé en ce qu'**un procédé selon l'une des revendications 2 à 13 est mis en oeuvre dans l' unité de commande et de régulation électronique (12).
